# EUROPEAN PATENT APPLICATION

(11) **EP 2 246 579 A1**
(43) Date of publication of application: **03.11.2010**
(21) Application number: 08871998.4
(22) Date of filing: 09.12.2008
(51) Int. Cl.: F16C 11/06, F16C 33/74, F16J 15/32

(54) **SEAL FOR KNUCKLE COUPLINGS AND USE THEREOF**

(30) Priority: 31.01.2008 ES 200800260
(71) Applicant: Airbus Operations S.L., 28906 Getafe, Madrid (ES)
(72) Inventor: ZAMORA GÓMEZ, Ignacio, E-28906 Getafe (Madrid) (ES)
(74) Representative: Ungria Lopez, Javier
(86) International application number: PCT/ES2008/000768
(87) International publication number: WO 2009/095511

(57) **Abstract**

Scaling for ball-and-socket joints, where ball-and-socket joint is defined as the joint between a swivel sphere and a fixed part, and said fixed part is anchored to a structure on which the ball-and-socket joint is mounted. The sealing comprises a frame arranged around the circumference where the swivel sphere is joined to the fixed part, and a brush. The brush is made up of a set of threads or hair of a material that is natural or synthetic, and flexible. And frame and brush are stuck to the fixed part by means of an adhesive of the type that cures with the local application of heat.

## Description

### OBJECT OF THE INVENTION

As stated in the title of this specification, the present invention relates to providing a sealing intended to cover grooves, slots and/or gaps that are variable in both shape and size, in ball-and-socket joints for vehicles such as aircraft, cars, trains, etc.

### TECHNICAL FIELD OF THE INVENTION

The present invention is framed within the field of seals intended to cover grooves, slots and/or gaps that are variable in both shape and size, in ball-and-socket joints for vehicles such as aircraft, cars, trains and similar.

In particular, it has application in the aeronautical industry, being suitable for the sealing of ball-and-socket joints, more precisely for the ball-and-socket Joints present in the bays of the landing gear of an aircraft.

### STATE OF THE ART PRIOR TO THE INVENTION

The sealing of ball-and-socket joints currently uses rigid metallic seals, commonly known as shields, fitted in the outer part of the swivel, which reduces the entry of contaminating agents into ball-and-socket joints and considerably diminishes the possibility of movement permitted by the element.

This type of sealing causes numerous problems in mounting and service, and they usually end up by breaking, with the annoying and expensive procedure of complete replacement of the swivel in its housing.

Present-day metallic seals are, given their nature, welded to the body of the fixed part, with the fixed part being anchored to the structure on which the ball-and-socket joint is fitted during the manufacturing process.

So, in view of possible damage caused by loss of the seal, the solution for giving the sealing system back its functionality includes dismantling and discarding the swivel, and then fitting a new swivel in the fixed part. This solution is, therefore, extremely costly in terms of time and money.

Moreover, swivels that do not have sealing show the drawback of permitting the entry of contaminating agents which, with the passage of time, are going to cause the mechanism to seize up, thus shortening its useful life.

In addition, the prior art includes ball-and-socket joint ASNA2557E, which has a seal that includes an elastic made of silicone, though the protective shield preventing the entry of contaminating agents continues to be metallic and not much flexible.

It was therefore desirable to obtain ball-and-socket joints that would overcome the following drawbacks:
- to maintain an adequate functioning of the ball-and-socket joint, meaning that the different possible rotations of the swivel would be able to be guaranteed at all times, with no gripping being allowed to occur in any situation.
- that wear due to movement would at all times take place within the elements forming the actual swivel, since they are the ones designed to suffer this wear; therefore, the appearance of the effects of wear in the bolts of the joint is not acceptable.
- that the maximum angular deviation stated in the specification for the swivel would at all times remain possible, which is going to facilitate the fitting and subsequent functioning of the ball-and-socket joints. On account of their geometry, rigid seals reduce this capacity.
- that they are resistant to the conditions inherent to their use in the aeronautical field, primarily consisting of: high mechanical stress, the need for a very high reliability, and the appearance of constant and abrupt changes of pressure and temperature.

Summarizing, it was desirable to obtain a sealing for ball-and-socket joints that would overcome the problems in service displayed by the present seals, bearing in mind that, due to assembly requirements, ball-and-socket joints need to have a large margin of angular deviation between the elements to join and which, due to functioning requirements, need to have the best possible seal so that the useful life of the joint is not going to be altered by contaminating agents, by high mechanical stress, nor by abrupt changes of pressure and temperature.

### DESCRIPTION OF THE INVENTION

The present invention is designed to overcome the drawbacks of the sealing mechanisms of the present art.

It has application in the aeronautical industry, being suitable for the sealing of structural joints, which do not transmit moment, which are subjected to severe ambient conditions, to wide pressure and temperature intervals and in zones with a high probability of pollution from contaminating agents such as hydraulic fluids, foreign particles and fuel, which harm the mechanical functioning of the joint.

Therefore, typical zones for application of the present invention would be areas housing numerous systems and mechanisms with external lubrication, such as for example the bays of the landing gear of an aircraft.

So, the present invention is related to a sealing for ball-and-socket joints, where the ball-and-socket joint is defined by the join between a swivel sphere with a fixed part, said fixed part being attached to a structure on which the ball-and-socket joint is fitted, and which consists of a frame, arranged around the circumference where the swivel sphere is joined to the fixed part with the structure on which it is mounted.

Moreover, the inside of the frame contains a set of hairs or threads that altogether give it the appearance of a brush. This brush performs the function of preventing foreign agents from penetrating inside the swivel and on the contact surface, during the movement of the ball-and-socket joint, in other words, the movement between the sphere of the swivel and the fixed part with the structure on which it is fitted. In addition, this brush permits the ball-and-socket joint to meet the maximum angular deviation stated in the specification for the swivel, without losing its properties under special functioning conditions, this is, in the presence of contaminating agents, due to high mechanical stress, nor on account of abrupt changes in pressure and temperature Inherent to the aircraft.

The type of material that is desirable for the hairs or threads of the brush can be either natural or synthetic (for example nylon), indifferently, depending on the compatibility that is needed with the outside agents. This compatibility refers to its chemical resistance towards contaminating agents, given the fact that these could, for example, be corrosive or they could attack plastic elements.

In a preferred embodiment, the length of the hairs or threads lies within the interval of 5 to 10 mm and the diameter between 0.2 and 0.8 mm.

The type of material desirable for the frame is preferably flexible, and can be synthetic, such as for example fluoropolymer (Teflon^{®}). It can also be a non-flexible frame, as might be a metallic frame.

Therefore, both the frame and the brush have a high degree of flexibility. In a particular embodiment, the brush is based on one of the already standardized brushes of the type ASNA-2169. CAN36007 or DAN136, adapted for this application, meaning, with the hairs or threads shorter, the frame smaller and in the form of a circumference.

The main advantage provided by this type of sealing is primarily related to its flexibility, given the fact that if the bolt were to come into contact with the elements of the brush, either during the fitting of the joint or during the flight, the flexible nature of the brush would cause it to give way momentarily, until the pressure of the bolt stops, when it would return to its normal working position and continue with the sealing action, thereby preventing breakages and allowing the maximum angular deviation stated in the specification for the swivel to be complied with.

Another advantage of this type of sealing is that it complies with what is stated in the previous paragraph without losing resistance under the special and adverse conditions to which it has to be subjected, such as abrupt changes of pressure and temperature and high mechanical stress.

Finally, due to the nature of the materials of the frame and the brush, this system of sealing allows the fixed part to be adhered to the structure on which it is mounted, using an adhesive of the type that sets at ambient temperature or with the local application of heat, and therefore the adhesion is easily replaceable, meaning that the seal is able to be replaced in the event of suffering any damage or defect without the need to dismantle the ball-and-socket joint from the structure on which it is mounted.

Moreover, the present invention describes the use of the sealing described above In grooves, slots or gaps, In grooves, slots or gaps of a vehicle, in grooves, slots or gaps of an aircraft and in structural joints that are subjected to severe ambient conditions at wide pressure and temperature intervals, for example in cycles from 70° C to -54° C, in very short time intervals, this is minutes.

### BRIEF DESCRIPTION OF THE FIGURES

The present Invention will be entirely understood on the basis of the brief description given below and the accompanying drawings that are presented, solely as an example and which are therefore not restrictive within the present invention and in which:
figures 1 and 2 show a diagram of the sealing fitted in a ball-and-socket joint,
figure 3 shows a diagram of the sealing in the ball-and-socket joint fixed to the structure,
figure 4 shows a diagram of a rigid sealing already existing in the prior art,
figure 5 shows a diagram of the problem presented by rigid seals existing in the prior art.

### References:

1: swivel
2: fixed part, which will be fixed to the structure on which the ball-and-socket joint is mounted
3: brush
4: frame

### PREFERRED FORM OF EMBODIMENT OF THE INVENTION

With the aim of reaching a better understanding of the object and functionality of this patent, and without being understood as restrictive solutions, so

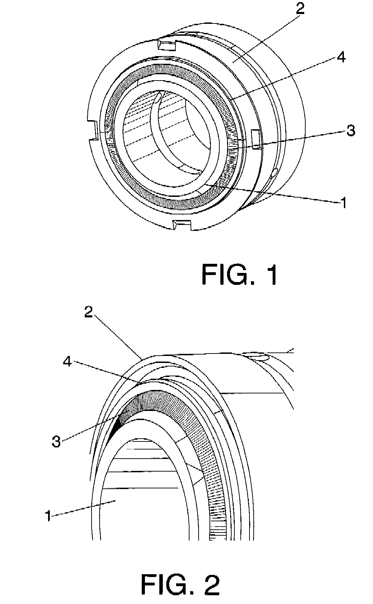

figures 1 and 2 show a diagram of the sealing fitted in the ball-and-socket joint, where the ball-and-socket joint is defined by the join between a swivel sphere (1) with a fixed part (2), said fixed part (2) being anchored to a structure on which the ball-and-socket joint is fitted. Said seal comprises a frame (4), arranged around the circumference where the swivel sphere (1) is joined to the fixed part (2), and a brush (3).

In addition, the brush (3) preferably comprises a set of hairs or threads of a material that is natural or synthetic and flexible, and the frame (4) is preferably made of a material that is synthetic and flexible. The frame (4) and the brush (3) are stuck to the fixed part (2) with an adhesive, preferably the adhesive is of the type that sets with the local application of heat.

In this way, in the event of possible defects or breakages thereof, it is able to be replaced without the need to remove the fixed structure and the ball-and-socket joint in their entirety. So, the expensive repairs of present-day seals are thus avoided.

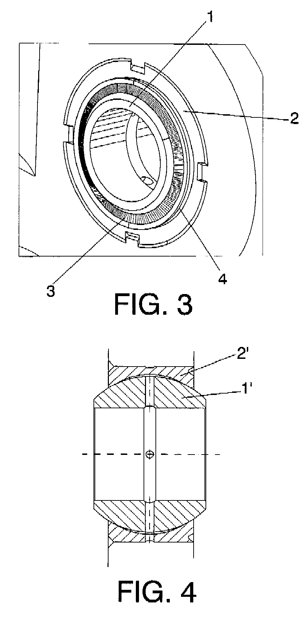

Figure 3 shows a diagram of the seal of the ball-and-socket joint already fixed to the structure.

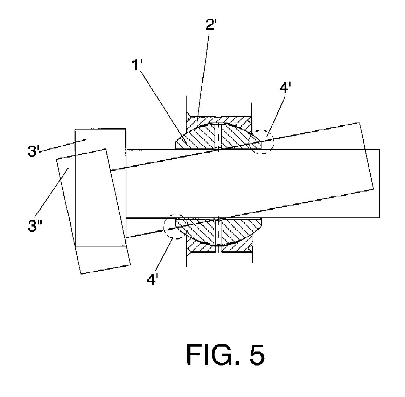

Figure 4 shows a diagram of a rigid seal existing in the prior art, where the reference 1' corresponds to the swivel and 2' corresponds to the fixed part of the ball-and-socket joint, and figure 5 shows a diagram showing the problem presented by this type of seal, where the reference 3' corresponds to the bolt in the standard position and 3" to the bolt in the rotated position, and in which the zones 4' can be clearly seen as zones of interference, where the breakages previously stated in this specification take place.
Figures 6.1, 6.2 and 6.3 relate to photos of a real situation of a damaged rigid sealing system, in order to facilitate a visualization of the problem presented by those seals.

## Claims

1. A sealing for ball-and-socket joints, being the ball-and-socket joint defined as the join between a swivel sphere (1) with a fixed part (2), said fixed part (2) being anchored to a structure on which the ball-and-socket joint is mounted, wherein it comprises:
- a frame (4) arranged around a circumference where the swivel sphere (1) is joined to the fixed part (2), and
- a brush (3).

2. The sealing for ball-and-socket joints according to claim 1, wherein the brush (3) comprises a set of threads or hairs of a material that is natural or synthetic, and flexible.

3. The sealing for ball-and-socket joints according to claim 1, wherein the frame (4) is made of a synthetic material, and flexible.

4. The sealing for ball-and-socket joints according to claim 1, wherein the frame (4) is metallic and not flexible.

5. The sealing for ball-and-socket joints according to claim 1, wherein the frame (4) and the brush (3) are stuck to the fixed part (2) with an adhesive of the type that cures with local application of heat.

6. The sealing for ball-and-socket joints according to claim 1, wherein the frame (4) and the brush (3) are stuck to the fixed part (2) with an adhesive of the type that cures at ambient temperature.

7. Use of the sealing for ball-and-socket joints defined in one of claims 1 to 6 for sealing grooves, slots or gaps.

8. Use of the sealing for ball-and-socket joints defined in one of claims 1 to 6 for sealing grooves, slots or gaps in a vehicle.

9. Use of the sealing for ball-and-socket joints defined in one of claims 1 to 6 for covering grooves, slots or gaps in an aircraft.

10. Use of the sealing for ball-and-socket joints defined in one of claims 1 to 6 for sealing structural joints, which are subjected to severe ambient conditions, at wide pressure and temperature intervals, for example in cycles from 1227 daN/m2 to -697 daN/m2 and from 70° C to -54° C, In very short time intervals, meaning, minutes.
